# EUROPÄISCHE PATENTSCHRIFT

(11) **EP 2 542 400 B1**
(45) Veröffentlichungstag und Bekanntmachung des Hinweises auf die Patenterteilung: **16.07.2014**
(21) Anmeldenummer: 11706211.7
(22) Anmeldetag: 24.02.2011
(51) Int. Cl.: B29C 45/16, B29C 45/04

(54) **HALTEVORRICHTUNG FÜR EIN DREHBARES MITTELTEIL IN EINER SPRITZGIESSVORRICHTUNG**
HOLDING UNIT FOR A ROTATABLE MIDDELMOULD OF AN INJECTOIN UNIT
DISPOSITIF DE SUPPORT POUR UNE PIECE CENTRALE ORIENTABLE DANS UN DISPOSITIF DE MOULAGE PAR INJECTION

(30) Priorität: 02.03.2010 CH 270102010
(43) Veröffentlichungstag der Anmeldung: 09.01.2013
(73) Patentinhaber: Foboha GmbH Formenbau, 77716 Haslach (DE)
(72) Erfinder: ARMBRUSTER, Rainer, 77709 Wolfach (DE)
(74) Vertreter: Rentsch Partner AG
(86) Internationale Anmeldenummer: PCT/EP2011/052754
(87) Internationale Veröffentlichungsnummer: WO 2011/107395

(56) Entgegenhaltungen:
- EP-A1- 0 895 848
- WO-A1-2007/082394
- DE-A1-102007 029 119
- US-A1- 2003 094 732
- US-A1- 2006 244 178
- US-A1- 2006 273 489
- US-A1- 2009 256 282

## Beschreibung

Die vorliegende Erfindung liegt auf dem Gebiet der Vorrichtungen zum Spritzgiessen von Kunststoff gemäss dem Oberbegriff des unabhängigen Patentanspruchs.

Aus dem Stand der Technik sind Spritzgiessvorrichtungen zum Spritzgiessen mit einem oder mehreren drehenden Mittelteilen bekannt. Diese werden zur effizienten Herstellung von mehrkomponentigen Kunststoffteilen verwendet. Zwischen zwei entlang von Holmen gegeneinander in einer ersten Richtung verfahrbaren Formhälften ist mindestens ein drehbares Mittelteil angeordnet, das an einer Haltevorrichtung befestigt und um eine Drehachse drehbar angeordnet ist. Das drehbare Mittelteil weist mindestens zwei parallele Seitenflächen auf, entlang derer es mit den beiden Formhälften zur Bildung von Kavitäten zusammenwirkt. In gewissen Ausführungsformen kann das drehbare Mittelteil zumindest auf einer Seite mit einem weiteren drehbaren Mittelteil zusammenwirken. Koordinationsmittel bewirken, dass das drehbare Mittelteil beim Öffnen und beim Schliessen mittig zwischen den beiden Formhälften positioniert bleibt und so Kollisionen vermieden werden.

EP1035959 und EP1155802 derselben Anmelderin wurden 1999 publiziert und betreffen beide eine Haltevorrichtung für ein drehbares Mittelteil (Form, Formhälfte, Formträger). Die Haltevorrichtung weist eine untere und eine obere Traverse auf, welche entlang der Holmen einer Spritzgiessmaschine geführt sind. Jede Traverse der Haltevorrichtung weist ein drehbares Haltemittel auf, welches zum lösbaren Einspannen der Form, Formhälfte oder des Formträgers dazwischen dient. Die Medienübergabe erfolgt vorzugsweise koaxial über Schnittstellen.

EP1725386 derselben Anmelderin wurde 2005 publiziert und betrifft ein Verfahren und eine Spritzgiessvorrichtung mit mehr als einem drehbaren Mittelteil. Damit besteht die Möglichkeit, Teile in zwei äusseren Trennebenen herzustellen und diese in einem weiteren Verarbeitungsschritt in einer weiteren Trennebene zu montieren. In den Figuren sind unterschiedliche Ausgestaltungen von Haltevorrichtungen für die drehbaren Mittelteile dargestellt.

Aus dem Stand der Technik sind weitere Dokumente bekannt, welche Verfahren oder Vorrichtungen zur Durchführung der Verfahren betreffen und mindestens ein drehendes Mittelteil aufweisen. Einige Beispiele werden anhand der Publikationsnummern eines Familienmitgliedes aufgezählt: US3224043 (Lego Systems SA, 1963), US3319300 (Aarburg Maschinenfabrik, 1964), US243364 (Husky Injection Molding, 1981), US4744741 (The Nepworth Iron Company Ltd.), US4734023 (Klöckner Ferromatik Desma GmbH, 1987), JP2143819 (Stanley Electric Co. Ltd.), US6139305 (Ferromatik Milacron Maschinenbau GmbH), US7018189 (Krauss Maffei Kunststofftechnik GmbH), US6709251 (MGS Enterprises Inc.), US7455516 (Krauss Maffei Kunststofftechnik GmbH).

Das Dokument WO2007082394 derselben Anmelderin zeigt das Herstellen von Produkten in einer ersten Verarbeitungsebene einer Spritzgiessvorrichtung. Die Produkte werden anschliessend mittels eines integrierten Transfersystems in eine zweite Verarbeitungsebene gebracht, wo ein weiterer Verarbeitungsschritt erfolgt. Es sind eine feststehende erste Formhälfte, eine in x-Richtung bewegliche dritte Formhälfte und eine ebenfalls in x-Richtung bewegliche zweite Formhälfte vorgesehen. Die zweite Formhälfte weist an gegenüberliegenden Seiten Kavitäten auf, die mit korrespondierenden Kavitäten der ersten und der dritten Formhälfte zusammenwirken. Die zweite Formhälfte weist Haltemittel auf, die zur Abstützung auf den Holmen dienen. Das Transfersystem weist in einem Schlitz der zweiten Formhälfte angeordnete Ausleger mit radial verstellbaren Auslegearmen auf. Die Auslegearme sind im Wesentlichen senkrecht zur Drehachse angeordnet. Durch radiales Verstellen der Auslegearme können Produkte aus den Kavitäten herausgehoben/in die Kavitäten eingebracht werden. Durch Drehen der radial ausgefahrenen Auslegearme können Produkte zwischen den Verarbeitungsebenen verschoben werden.

Die US2006273489 (Wayne Shakal) zeigt ein Formwerkzeug für eine Spritzgiessmaschine. Das Formwerkzeug hat eine stationäre Platte und eine verfahrbare Platte, welche für das Verbinden mit einer Spritzgiessmaschine vorgesehen sein können. Ein drehbares Mittelteil ist auf einer Achse gelagert, welche von an Führungsstangen verschiebbaren Träger gelagert ist.

Die US20090256282 (George Olaru) zeigt eine Spritzgiessmaschine mit einer feststehenden Form, einer verfahrbaren Form und einer drehbaren Einheit, welche auf einer Dreheinheit gehalten ist. Die Dreheinheit ist auf einer Basisplatte angeordnet. Die Basisplatte ist auf einer Schiene o.ä angeordnet und ist in dieselbe Richtung bewegbar wie die verfahrbare Form.

Die DE102007029119 (Engel Austria) zeigt eine Schliesseinheit einer Spritzgiessmaschine mit einer horizontal beweglichen Werkzeugaufspannplatte mit Formwerkzeug, einer feststehenden Werkzeugaufspannplatte mit Formwerkzeug und einem dazwischen angeordnetem Mittelwerkzeug, das auf einer Verschiebeeinheit lösbar befestigbar ist. Die Verschiebeeinheit ist horizontal beweglich und umfasst eine Rotationseinheit. Das Spritzwerkzeug ist mit Schnellverschluss leicht austauschbar.

Die US20030094732 (Payette Dennis) zeigt eine Spritzgiesseinrichtung mit einem Frontteil, einem Mittelteil und einem Rückteil. Das Fronteil und Rückteil werden zum Mittelteil geschlossen. Nach dem Spritzen werden die Teile geöffnet, das Mittelteil um 180° rotiert und die Teile geschlossen. Ein Drehtisch ist scheibenförmig ausgeführt und an den Ränder von Leisten gehalten.

Eine Aufgabe der Erfindung besteht darin, eine verbesserte Haltevorrichtung für drehbare Formmittelteile zu zeigen, welche flexibler einsetzbar ist und eine vereinfachte, kostengünstigere Fertigung erlaubt.

Diese Aufgabe wird durch die in den unabhängigen Patentansprüchen definierte Haltevorrichtung gelöst.

Die Erfindung umfasst eine modular aufgebaute Haltevorrichtung zur Halterung eines drehbaren Mittelteils in einer Spritzgiessvorrichtung, respektive einer Spritzgiessmaschine. Durch den speziellen, modularen Aufbau besteht die Möglichkeit, die Haltevorrichtung flexibel an unterschiedliche Arten und Dimensionen von Spritzgiessmaschinen anzupassen. In einer Ausführungsform weist die Haltevorrichtung zumindest eine Traverse mit einem mehrteiligen Aufbau auf. Die Traverse umfasst einen Mittelblock an dem über normierte Schnittstellen bei Bedarf unterschiedliche Dreheinheiten, sowie ein oder mehrere gleiche oder unterschiedliche Seitenblöcke befestigt werden können. Die Seitenblöcke dienen zum direkten oder indirekten Abstützen der Haltevorrichtung über Führungsmittel an Holmen oder einem Maschinenbett einer Spritzgiessmaschine. Die Seitenblöcke können auf die Art und Dimension von Spritzgiessmaschinen (z.B. Abstand der Holmen) abgestimmte, spezifische Ausgestaltungen aufweisen. Die Seitenblöcke eignen sich zur direkten oder indirekten Befestigung von Führungsmitteln, z.B. in Form von ein oder mehrteiligen Lagerschalen oder Führungsschienen. Die Seitenblöcke können so ausgestaltet sein, dass sie sich gleichzeitig zur Befestigung von Koordinationsmitteln eignen. Die modulare Ausgestaltung der erfindungsgemässen Haltevorrichtung ermöglicht einen individuelle, auf unterschiedliche Spritzgiessmaschinen optimierten Aufbau von Haltevorrichtung. Ein Vorteil besteht darin, dass eine bestehende Haltevorrichtung einfach auf eine andere Spritzgiessmaschine übertragen werden kann, indem z.B. nur die Seitenblöcke und die Lagerschalen gewechselt werden.

Eine erfindungsgemässe Haltevorrichtung dient zur Halterung eines um eine Drehachse drehbaren Mittelteils in einer Spritzgiessvorrichtung mit einer Spritzgiessmaschine und äusseren Formhälften. Die Spritzgiessvorrichtung umfasst in der Regel eine feststehende erste Formhälfte und eine gegenüber der feststehenden in einer ersten Richtung beweglichen zweiten Formhälfte welche an einer ersten und einer zweiten Formaufspannplatte der Spritzgiessmaschine befestigt sind. Das drehbare Mittelteil ist zwischen der ersten und der zweiten Formhälfte angeordnet und weist ein oder mehrere Paare von im Wesentlichen parallel zueinander angeordneten Seitenflächen auf, in denen erste Kavitätenhälften angeordnet sind. Die ersten Kavitätenhälften dienen im Bereich einer ersten und einer zweiten Trennebene zur Bildung von Formholräumen mit zweiten, respektive dritten Kavitätenhälften der ersten und der zweiten Formhälfte. Durch relatives Verschieben der ersten und der zweiten Formhälfte, respektive des dazwischen angeordneten drehbaren Mittelteils gegeneinander in der ersten Richtung kann die Spritzgiessvorrichtung entlang der ersten und der zweiten Trennebene geöffnet, respektive geschlossen werden. Je nach Ausführungsform können zwischen den beiden Formhälften auch mehrere drehbare Mittelteile hinter oder nebeneinander angeordnet sein.

Im Unterschied zum Stand der Technik weist die Haltevorrichtung mindestens eine modular aufgebaute Traverse auf. Die Traverse weist in der Regel einen Mittelblock auf, an dem mindestens ein Seitenblock befestigt ist, der zur Lagerung, respektive Führung und/oder Koordination der Haltevorrichtung gegenüber der Spritzgiessvorrichtung dient. Am Seitenblock können zu diesem Zweck Führungsmittel, respektive Koordinationsmittel befestigt werden. Der Mittelblock weist Wirkverbindungsmittel zum Befestigten einer Dreheinheit zur drehbaren Halterung des Mittelteils um die Drehachse auf. Die Haltevorrichtung kann eine untere und/oder eine obere Haltevorrichtung aufweisen. Durch die modulare Traverse kann eine Haltevorrichtung aus normierten Teilen (Mittelblöcke, Dreheinheiten, Seitenblöcke, usw.) den Anforderungen entsprechend aufgebaut und an unterschiedliche Spritzgiessmaschinen angepasst werden.

In der Regel sind auf zwei gegenüberliegenden Seiten des Mittelblocks Seitenblöcke angeordnet, an denen je mindestens ein Führungsmittel angebracht ist. Die Führungsmittel dienen zum linearen Führen der Traverse und damit der Haltevorrichtung in der ersten Richtung. Die Führungsmittel sind an den Holmen und/oder gegenüber einem Maschinenbett einer Spritzgiessmaschine linear verschiebbar angeordnet. Auf dem Maschinenbett können zu diesem Zweck Führungsschienen abgestützt sein.

Beim Öffnen und Schliessen der Spritzgiessvorrichtung ist es erforderlich, dass der drehbare Mittelteil in der Mitte zwischen der ersten und der zweiten Formhälfte angeordnet ist. Um dies zu gewährleisten werden Koordinationsmittel z.B. in Form von miteinander gekoppelten Zahnstangen oder Gewindespindeln oder Hydraulikzylinder, usw. verwendet. Mindestens einer der Seitenblöcke weist in der Regel Wirkverbindungsmittel zum Befestigen eines Koordinationsmittels auf, mittels dem die zugeordnete Traverse und damit das Mittelteil gegenüber der Spritzgiessvorrichtung koordiniert wird.

Die mindestens eine Dreheinheit ist mit Vorteil ebenfalls als Modul aufgebaut, das lösbar mit dem Mittelblock wirkverbunden ist. Die Dreheinheit weist ein gegenüber einem Aussenteil mittels einem unteren und einem oberen Lager drehbar gelagertes Innenteil auf. Im Bereich von zwei sich konzentrisch gegenüberliegenden Seitenflächen des Aussen und des Innenteils sind konzentrisch verlaufende, ringförmige Nuten zwischen dem Aussenteil und dem Innenteil angeordnet. Diese münden in axial verlaufende Kanäle des Innenteils und dienen zur Übergabe von Medien an das drehbare Mittelteil in einem oder mehreren Kreisläufen. Unter Medien wird Wasser, Luft oder Hydrauliköl, usw. verstanden, welche zum Betrieb der Spritzgiessvorrichtung erforderlich sind. Je nach Ausführungsform können die ringförmigen Nuten in axialer und/oder in radialer Richtung versetzt zueinander angeordnet sein. Damit die Medien nicht unkontrolliert entweichen, können zwischen den ringförmigen Nuten Dichtungen angeordnet sein. Bei Bedarf kann zumindest an einem der Innteile eine Adapterplatte befestigt sein, mittels der das drehbare Mittelteil mit dem entsprechenden Innenteil wirkverbunden werden kann. Z.B. bei kleineren Ausführungsformen oder Ausführungsformen die nicht zerlegt werden müssen, kann das Innenteil fest mit dem drehbaren Mittelteil wirkverbunden sein. Die Adapterplatte kann mit automatisch ein- und ausrastenden Schnellkupplungen zur Übergabe von Medien zwischen der Adapterplatte und dem drehenden Mittelteil ausgestattet sein. Um das drehbare Mittelteil antreiben zu können, weist die Haltevorrichtung einen elektrischen oder hydraulischen Motor auf, der über ein Getriebe mit dem drehenden Mittelteil wirkverbunden ist. Um die Kräfte besser verteilen zu können, kann das Getriebe ein Planetengetriebe sein, mit einem äusseren, ringförmigen, innenverzahnten ersten und einem inneren, aussenverzahnten zweiten Zahnrad, zwischen denen zur verteilten Übertragung der Kräfte auf das drehbare Mittelteil mehrere Planetenräder angeordnet sind. Damit das drehbare Mittelteil einfach ein- und ausgebaut werden kann, kann die untere und/oder die obere Haltevorrichtung eine Stellvorrichtung aufweisen, mittels der die Dreheinheit gegenüber dem Mittelblock in axialer Richtung (Richtung der Drehachse) verstellbar ist. In einer Ausführungsform weist der Mittelblock eine in axialer Richtung angeordnete Öffnung auf, welche zur Aufnahme einer Dreheinheit dient. Die Öffnung kann bei Bedarf in seitlicher Richtung offen ausgestaltet sein, so dass die Dreheinheit von der Seite her montiert werden kann.

Anhand der nachfolgenden Figuren werden Ausführungsbeispiele der Erfindung beschrieben. Es zeigen
- Fig. 1: eine erste Ausführungsform einer erfindungsgemässen Haltevorrichtung mit einem drehbaren Mittelteil von vorne;
- Fig. 2: die Haltevorrichtung und das Mittelteil gemäss Figur 1 von der Seite;
- Fig. 3: die Haltevorrichtung und das Mittelteil gemäss Figur 1 in einer perspektivischen Darstellung;
- Fig. 4: eine untere Haltevorrichtung in einer perspektivischen Darstellung;
- Fig. 5: die untere Haltevorrichtung gemäss Figur 4 in einer Explosionsdarstellung;
- Fig. 6: eine obere Haltevorrichtung in einer perspektivischen Darstellung;
- Fig. 7: die obere Haltevorrichtung gemäss Figur 6 in einer perspektivischen Darstellung von schräg oben;
- Fig. 8: eine zweite Ausführungsform einer erfindungsgemässen Haltevorrichtung mit einem drehbaren Mittelteil von vorne;
- Fig. 9: die Haltevorrichtung und das Mittelteil gemäss Figur 8 von der Seite;
- Fig. 10: die Haltevorrichtung und das Mittelteil gemäss Figur 8 in einer perspektivischen Darstellung von schräg oben;
- Fig. 11: die Haltevorrichtung gemäss Figur 10 in einer Explosionsdarstellung von schräg oben;
- Fig. 12: eine dritte Ausführungsform der Erfindung in einer perspektivischen Darstellung von schräg oben.

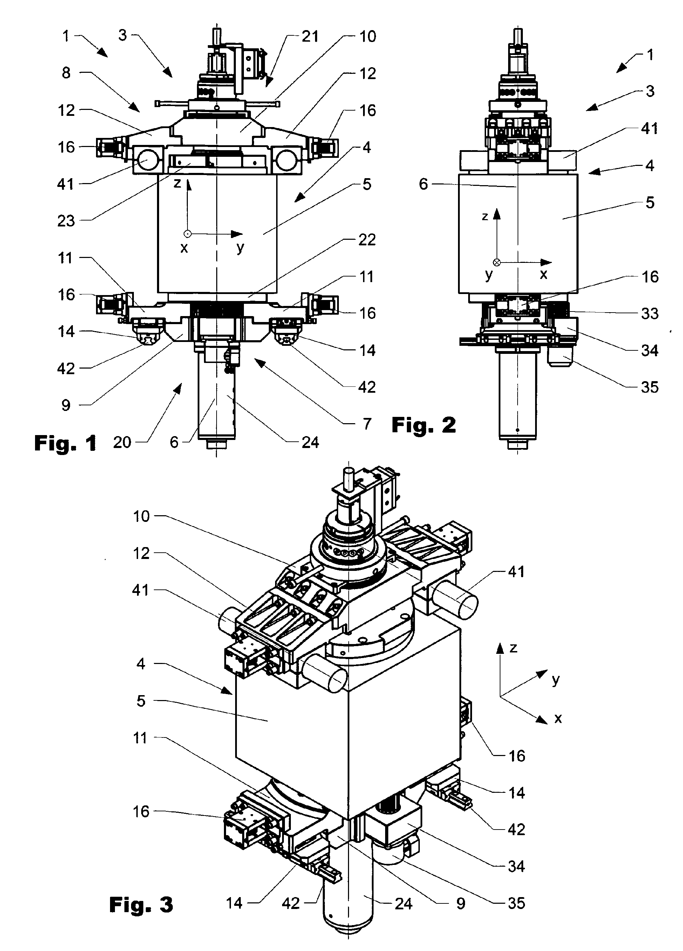

**Figur 1** zeigt eine erste Ausführungsform einer erfindungsgemässen Haltevorrichtung 1 in einer Vorderansicht (-x-Richtung), **Figur 2** zeigt die Haltevorrichtung 1 in einer Seitenansicht (y-Richtung) und **Figur 3** zeigt die Haltevorrichtung 1 in einer perspektivischen Darstellung von schräg oben.

Die Haltvorrichtung 1 setzt sich in der gezeigten Ausführungsform aus einer unteren und eine oberen Haltevorrichtung 2, 3 zusammen. Zwischen der unteren und der oberen Haltevorrichtung 2, 3 ist ein drehbares Mittelteil 4 angeordnet. Das Mittelteil 4 weist mehrere parallele Seitenflächen 5 auf und ist um eine Drehachse 6 (z-Achse) mittels der unteren und der oberen Haltevorrichtung 2, 3 drehbar gelagert. In Realität sind im Bereich von zwei oder vier paarweise gegenüber liegenden Seitenflächen 5 erste Kavitätenhälften (nicht dargestellt) angeordnet, die zur Bildung von Kavitäten (nicht dargestellt) in einer Schliessstellung der Spritzgiessvorrichtung mit weiteren Kavitätenhälften im Bereich von einer Seitenfläche von mindestens einer Formenhälfte (nicht dargestellt) und/oder eines weiteren drehbaren Mittelteils (nicht dargestellt) zusammenwirken. Die untere und die obere Haltevorrichtung 2, 3 weisen vom Prinzip her einen ähnlichen Aufbau auf, der nachfolgend näher erläutert wird. Je nach Anwendungsgebiet kann die obere Haltevorrichtung 3 auch weggelassen werden.

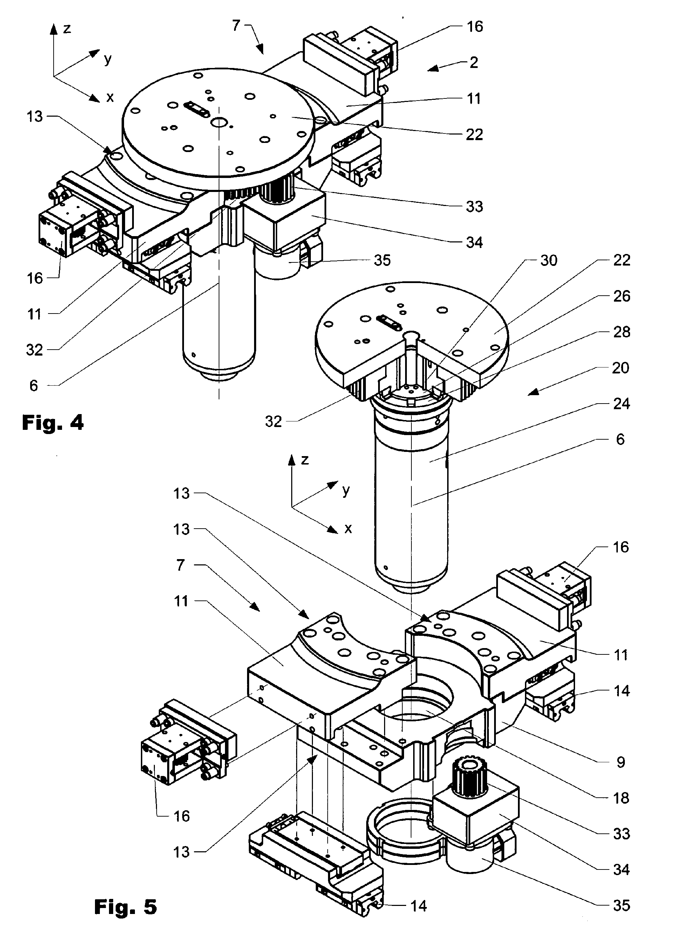

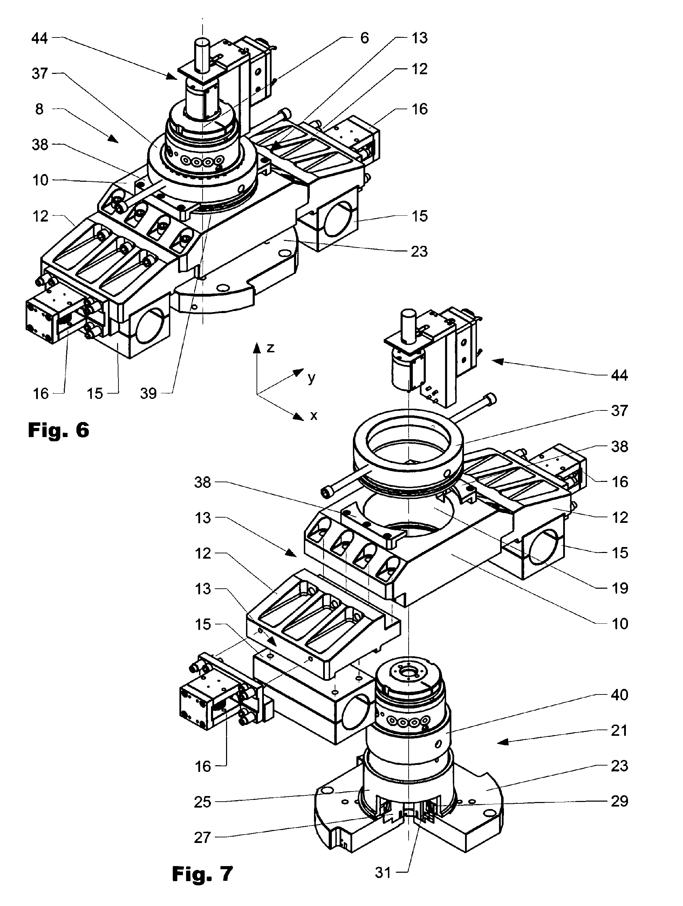

In **Figur 4** ist die untere Haltevorrichtung 2 in einer perspektivischen Ansicht von schräg oben gezeigt. In **Figur 5** ist dieselbe untere Haltevorrichtung 2 in einer Explosionsdarstellung teilweise zerlegt dargestellt. In **Figur 6** ist die obere Haltevorrichtung 3 in einer perspektivischen Ansicht von schräg oben gezeigt. In **Figur 7** ist dieselbe obere Haltevorrichtung 3 in einer Explosionsdarstellung teilweise zerlegt dargestellt.

Als zentrales, tragendes Element dienen modular aufgebaute untere und obere Traversen 7, 8. Diese Traversen 7, 8 bestehen je aus einem Mittelblock 9, 10 an dem auf jeder Seite gegenüberliegende Seitenblöcke 11, 12 über normierte Schnittstellen 13 befestigt sind. Die normierten Schnittstellen 13 eignen sich zur Befestigung von unterschiedlich ausgestalteten Seiten-, resp. Mittelblöcken 9, 10, 11, 12. D.h. unterschiedlich ausgestaltete Mittel- und Seitenblöcke 9, 10, 11, 12 weisen die selben normierten Schnittstellen 13 auf, so dass sie untereinander kompatibel sind. Bei den normierten Schnittstellen kann es sich z.B. um Schraubverbindungen mit einem definierten Lochschema z. B. für Schrauben und/oder Führungszapfen, respektive deren Gegenmittel handeln.

Die Mittelblöcke 11, 12 können so ausgestaltet sein, dass einzeln oder in Kombination unterschiedliche Seitenblöcke 11, 12 individuell daran befestigt werden können. Die Seitenblöcke 11, 12 sind wiederum so ausgestaltet, dass an normierten Schnittstellen 13 anwendungsspezifisch unterschiedliche Führungsmittel 14, 15, und/oder Koordinationsmittel 16, 17 befestigt werden können. Dadurch besteht die Möglichkeit, unterschiedliche Konfigurationen zusammenzustellen, welche einfach auf unterschiedliche Typen von Spritzgiessmaschinen abgestimmt werden können.

Die Mittelblöcke 9, 10 der unteren und der oberen Haltevorrichtung 2, 3 weisen je eine in vertikaler Richtung (z-Richtung) durchgehende Öffnung 18, 19 auf, die zur Aufnahme einer unteren, resp. einer oberen Dreheinheit 20, 21 dienen. Die Dreheinheiten 20, 21 weisen in der gezeigten Ausführungsform je eine Adapterplatte 22, 23 auf, welche zur ein- oder zweiseitigen Halterung des drehbaren Mittelteils 4 und zum Austausch von Medien wie Luft, Wasser, Öl sowie Energie in mechanischer und/oder elektrischer Form dienen. Ebenfalls können die Adapterplatten 22, 23 Verbinder (nicht näher dargestellt) aufweisen, welche zum Austausch von Informationen zwischen dem Mittelteil 4 und mindestens einer Adapterplatte 22, 23 dienen. Die Adapterplatten 22, 23 weisen in der Regel mechanische Wirkverbindungsmittel auf, welche zum lösbaren oder unlösbaren Wirkverbinden des Mittelteils 4 dienen. Bei Haltevorrichtungen 1 für grössere Spritzgiessvorrichtungen (vgl. **Figuren 1** bis **7**) sind die Wirkverbindungsmittel in der Regel lösbar ausgestaltet, so dass das Mittelteil 4 einfach ein- und ausgebaut werden kann. In gewissen Ausführungsformen können die Adapterplatten 22, 23 vermieden oder fest mit dem drehbaren Mittelteil 4 verbunden werden, indem die Dreheinheiten 20, 21 integral mit dem drehbaren Mittelteil 4 wirkverbunden sind.

Die Dreheinheiten 20, 21 weisen beide einen nicht drehbar angeordneten Aussenteil 24, 25 auf. Innenteile 26, 27 sind mittels Lagern 28, 29 (vgl. **Figuren 5** und **7**) gegenüber dem jeweiligen Aussenteil 24, 25 um die Drehachse 6 (z-Achse) drehbar gelagert. Bei den Lagern 28, 29 handelt es sich in der Regel um Kugel- oder Rollenlager. Im Innern der Dreheinheiten 20, 21 können weitere Lager angeordnet sein, die aber in der gezeigten Darstellung nicht ersichtlich sind.

In den Figur 5 und 6 ist im Bereich der Adapterplatten 22, 23 ein Teil der Adapterplatten 22, 23, des Aussen- und des Innenteils 24, 25, sowie eines der Lager 28, 29 geschnitten dargestellt, so dass der innere Aufbau der Dreheinheiten 20, 21 besser ersichtlich wird. Die Adapterplatten 22, 23 sind in der gezeigten Ausführungsform je an einem der Innenteile 24, 25 befestigt. Die Innenteile 24, 25 weisen axial verlaufende Kanäle 30, 31 auf, die im Innern der jeweiligen Dreheinheit in axialer Richtung gesehen konzentrisch verlaufende ringförmige Nuten (nicht zu erkennen) münden, welche zwischen dem Innenteil 26, 27 und dem Aussenteil 24, 25 angeordnet sind. Die ringförmigen Nuten sind gegeneinander mittels 0-Ringen abgedichtet. Die ringförmigen Nuten können, je nach Ausgestaltung der Dreheinheit 20, 21, in axialer Richtung versetzt und/oder auf derselben Höhe angeordnet sein. Die ringförmigen Nuten sind am Innteil 26, 27 und/oder am Aussenteil 24, 25 eingelassen.

Die untere Dreheinheit ist, wie in **Figur 4** dargestellt, im Betrieb fest mit dem unteren Mittelblock 9 verbunden. Unterhalb der unteren Adapterplatte 22 ist ein erstes Zahnrad 32 angebracht und mit der Adapterplatte 22 wirkverbunden, welches zum Antreiben des Mittelteils 4 um die Drehachse 6 dient. Das erste Zahnrad 32 kämmt in der gezeigten Ausführungsform mit einem zweiten, kleineren Zahnrad 33, welches über ein Getriebe 34 mit einem Motor 35 wirkverbunden ist. Das Getriebe 34 und der Motor 35 sind ebenfalls an dafür vorgesehenen Haltemitteln des unteren Mittelblocks 9 befestigt. Bei Bedarf kann alternativ oder in Ergänzung auch die obere Haltevorrichtung 3 mit einem Antrieb ausgestattet werden. Beim Getriebe 34, welches die Kraft vom Motor 35 auf das zugeordnete Innenteil 26, respektive wenn vorhanden, auf die zugeordnete Adapterplatte 22 und von da auf das drehbare Mittelteil 4 überträgt, kann es sich um ein konventionelles ein- oder mehrstufiges Getriebe handeln. Um die Kräfte besser verteilt übertragen zu können, kann auch ein koaxial zur Drehachse 6 des Mittelteils 4 angeordnetes Planetengetriebe eingesetzt werden. Damit kann der Verschleiss der sich mit Bezug auf die Drehachse 6 in der Regel nur in einem Winkel von 90° oder 180° relativ zueinander bewegenden Zahnräder reduziert werden.

In den **Figuren 6** und **7** ist die obere Haltevorrichtung 3 dargestellt. Die obere Dreheinheit 21 ist in der Öffnung 19 des oberen Mittelblocks 10 angeordnet und gegenüber diesem in axialer Richtung (z-Richtung) in einem beschränkten Bereich verschiebbar. Mittels einer Stellvorrichtung 36 kann die axiale Position der oberen Adapterplatte 23 gegenüber dem drehbaren Mittelteil 4 verstellt werden, so dass diese einfach ein- und ausgebaut werden kann. Die Stellvorrichtung 36 der gezeigten Ausführungsform umfasst einen Stellring 37, der gegenüber dem oberen Mittelblock 10 drehfrei positioniert ist. Zwei seitlich zum Stellring 37 angeordnete Pratzen 38 sind am oberen Mittelblock 10 befestigt und greifen in eine umlaufende Nut 39 des Stellringes 37 ein. Der Stellring 37 weist ein Innengewinde (nicht zu erkennen) auf, welches mit einem Aussengewinde 40 auf dem Aussenmantel des oberen Aussenteils 25 angeordnet ist. Durch Drehen des Stellringes 37 gegenüber der oberen Dreheinheit 21 kann diese und damit die obere Adapterplatte 23 in axialer Richtung gegenüber der unteren Adapterplatte 22 relativ verschoben werden. Damit kann der Mittelblock ein- und ausgespannt werden.

Wie in den **Figuren 1** bis **7** zu erkennen ist, sind an den Seitenblöcken 11, 12 der unteren und der oberen Traverse 7, 8 Führungs- und Koordinationsmittel 14, 15, 16, 17 befestigt. Die oberen Führungsmittel 15 dienen dazu, die Haltevorrichtung 1, respektive das drehbaren Mittelteil 4 gegenüber von oberen, zylindrischen Holmen 41 einer nicht näher dargestellten handelsüblichen Spritzgiessmaschine abzustützen und zu führen. Die oberen Führungsmittel 15 umgreifen die Holme 41 in Form von zwei Halbschalen und sind entlang der Holmen (in γ-Richtung) verschiebbar gelagert. An den Seitenblöcken 11 der unteren Traverse 7 sind untere Führungsmittel 14 befestigt, welche auf Profilschienen 42 abgestützt und entlang von diesen (in γ-Richtung) verschiebbar angeordnet sind. Die Profilschienen 42 sind normalerweise auf einem Maschinenbett der Spritzgiessmaschine befestigt. Bei Bedarf können die unteren Seitenblöcke 11 so ausgestaltet sein, dass an ihnen alternativ oder in Ergänzung weitere Führungsmittel befestigt werden können, mittels denen die untere Traverse 7 an unteren Holmen (nicht näher dargestellt) einer Spritzgiessmaschine abgestützt werden können. Elektrische Energie und/oder Daten werden über Schleifkontakte 44 an das drehbare Mittelteil 4 übertragen.

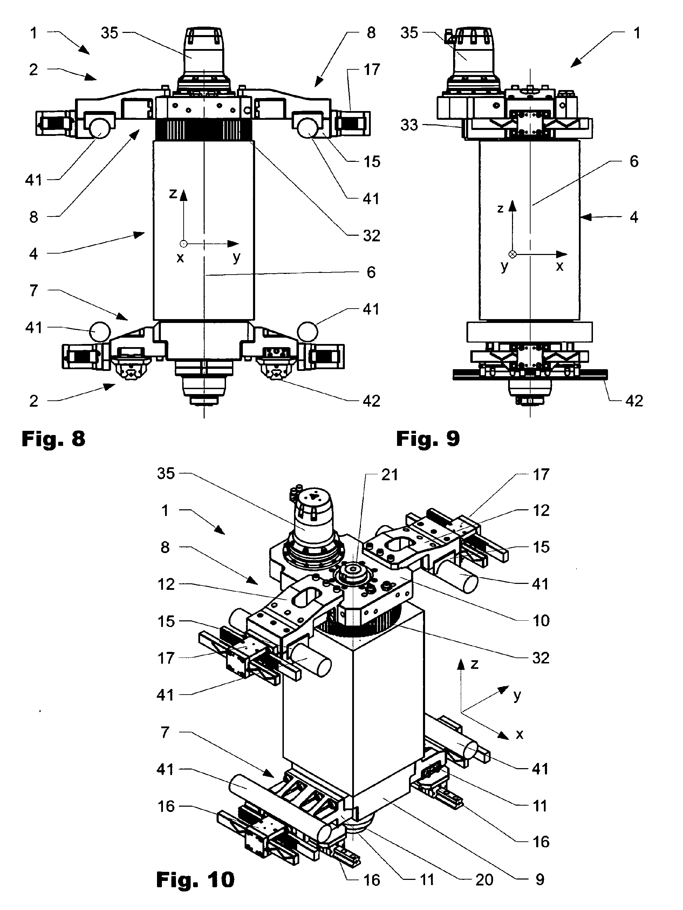

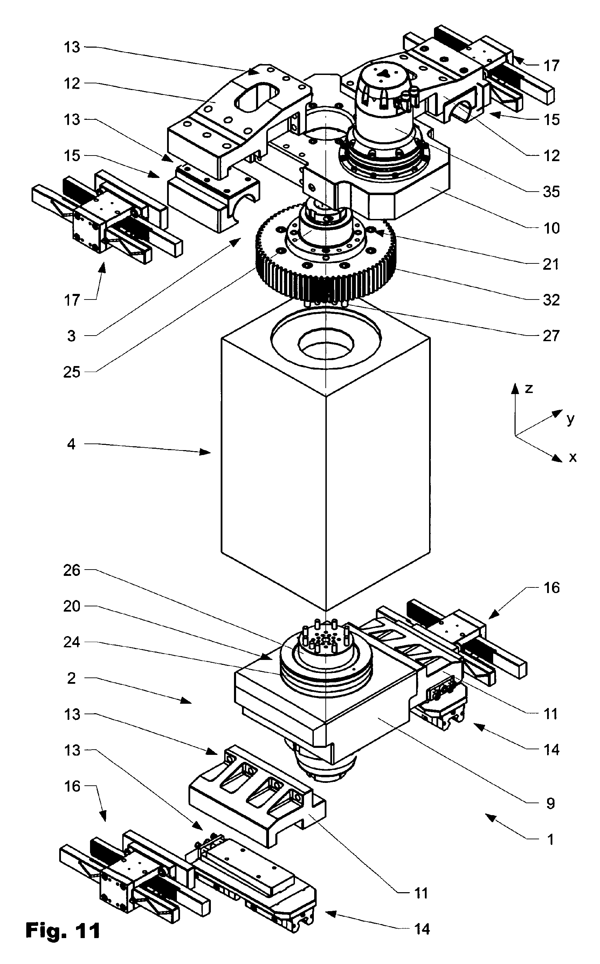

Die **Figuren 8** bis 11 zeigen eine weitere Ausführungsform der Haltevorrichtung 1. In **Figur 8** ist die Haltevorrichtung 1 von vorne und in **Figur 9** von der Seite dargestellt. **Figur 10** zeigt die Haltevorrichtung 1 in einer perspektivischen Darstellung von schräg oben gezeigt. **Figur 11** zeigt die Haltevorrichtung 1 in einer Explosionsdarstellung aus derselben Blickrichtung wie in Figur 10. Die allgemeine Beschreibung der Ausführungsform gemäss den Figuren 1 bis 6 trifft auch auf die zweite Ausführungsform gemäss den Figuren 8 bis 11 zu. Sofern nicht anders definiert, werden für sich entsprechende Teile die selben Bezugszeichen verwendet.

Die Haltevorrichtung 1 ist ebenfalls aus einer unteren und einer oberen Haltevorrichtung 2, 3 zusammengesetzt. Beide weisen als zentrale, tragende Elemente modular aufgebaute Traversen 7, 8 auf. Durch diesen Aufbau können die Vorrichtungen aus wenigen standardisierten Elementen an unterschiedliche Spritzgiessmaschinen angepasst werden. Die Traversen 7, 8 weisen je einen Mittelblock 9, 10 auf, an denen auf beiden Seiten Seitenblöcke 11, 12 befestigt sind. Die Seitenblöcke 11, 12 dienen zur Befestigung von Führungs- und/oder Koordinationsmittel 14, 15, 16, 17. Die unteren und die oberen Führungsmittel 14, 15 dienen zum Abstützen und Führen der Haltevorrichtung 1 und dem drehenden Mittelteil 4 im oberen Bereich gegenüber den Holmen 41 einer Spritzgiessmaschine, respektive im unteren Bereich über Führungsschienen 42 gegenüber einem Maschinenbett einer Spritzgiessmaschine (nicht näher dargestellt). Im unteren Bereich ist die Haltevorrichtung 1 nicht an den Holmen 41 abgestützt.

In der Explosionsdarstellung gemäss **Figur 11** ist der Aufbau der Ausführungsform zu erkennen. Die Vorrichtung ist in x-, resp. z-Richtung zerlegt. Die Haltevorrichtung 1 weist eine untere und eine obere Traverse 7, 8 auf, welche mehrteilig ausgestaltet sind. Die Traversen 7, 8 weisen je einen Mittelblock 9, 10 auf, an denen über normierte Schnittstellen 13 auf zwei gegenüberliegenden Seiten Seitenblöcke 11, 12 befestigt sind. Am oberen Mittelblock 10 ist ein Motor 35 befestigt, der über ein erstes und ein zweites Zahnrad 32, 33 (vgl. auch **Figuren 8** und **9**) einen drehbaren Mittelteil 4 und die Drehachse 6 antreibt. Der untere und der obere Mittelblock 9, 10 eignen sich zur Aufnahme einer unteren und einer oberen Dreheinheit 20, 21. In der gezeigten Ausführungsform sind die Innenteile 26, 27 der Dreheinheiten 20, 21 so ausgestaltet, dass sie direkt und im Normalbetrieb unlösbar mit dem drehbaren Mittelteil 4 wirkverbunden werden. Im Unterschied zur Ausführungsform gemäss den Figuren 1 bis 7 ist in der gezeigten Ausführungsform keine axiale Verschiebbarkeit (z-Richtung) der oberen Haltevorrichtung 3 vorgesehen.

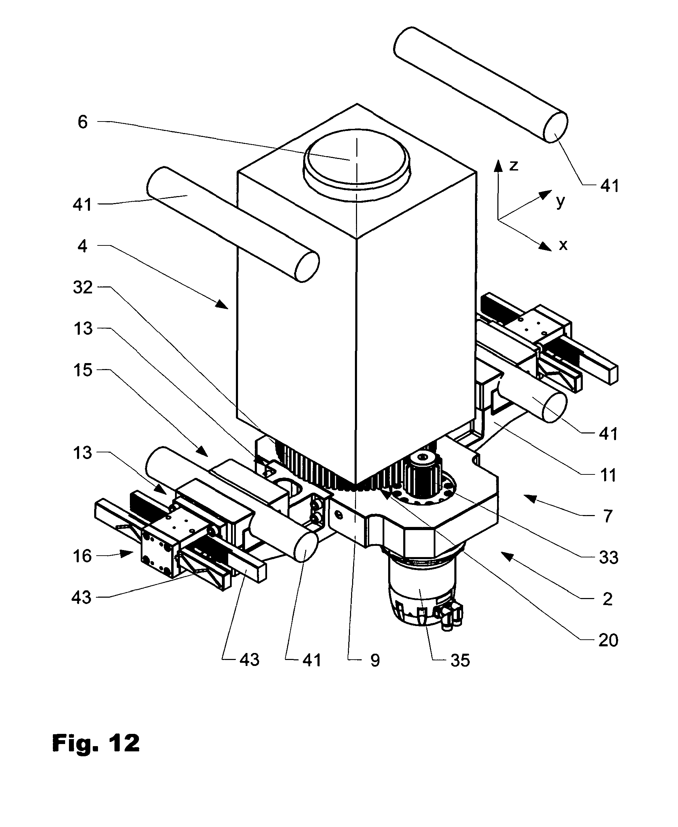

**Figur 12** zeigt eine dritte Ausführungsform einer Haltevorrichtung 1 für ein drehbares Mittelteil 4. Die Haltevorrichtung 1 besteht aus einer unteren Haltevorrichtung 2 mit einer modular aufgebauten Traverse 7, welche einen Mittelblock 9 und zwei seitlich über normierte Schnittstellen 13 daran befestigte Seitenblöcke 11 aufweist. An den Seitenblöcken 11 sind Führungsmittel 14 befestigt, welche mit Holmen 41 einer Spritzgiessmaschine (nicht näher dargestellt) wirkverbunden sind. Die Haltevorrichtung 1 ist entlang der Holmen 41 (x-Richtung) verschiebbar gelagert. Bei Bedarf oder alternativ kann die Traverse 7 auch auf einem Maschinenbett der Spritzgiessmaschine über Linearführungen abgestützt sein. Ebenfalls an den Seitenblöcken 11 befestigt sind Koordinationsmittel 16, welche in der gezeigten Ausführungsform auf miteinander wirkverbundenen Zahnstangen 43 basieren. Bei Bedarf können andere Koordinationsmittel 16 vorgesehen werden. Am unteren Mittelblock 9 ist ein Motor 35 befestigt, welcher über ein Getriebe bestehend aus einem ersten und einem zweiten Zahnrad 32, 33 zum Antreiben des Mittelteils 4 um die Drehachse 6 dient. Eine untere Dreheinheit 20 ist im Mittelblock 9 unterhalb des ersten Zahnrades 32 eingebaut. Die Dreheinheit kann Kanäle zum Durchleiten von Medien aufweisen. Im oberen Bereich weist das drehbare Mittelteil 4 keine Führung auf und steht frei zwischen den Holmen. Diese Ausführungsform eignet sich primär für kleinere Vorrichtungen oder langsam drehende grosse Vorrichtungen.

**LISTE DER BEZUGSZEICHEN**

| | | | |
|---|---|---|---|
| 1 | Haltevorrichtung | 23 | Obere Adapterplatte (obere Dreheinheit) |
| 2 | Untere Haltevorrichtung | | |
| 3 | Obere Haltevorrichtung | 24 | Unteres Aussenteil |
| 4 | Drehbares Mittelteil | 25 | Oberes Aussenteil |
| 5 | Seitenflächen (Mittelteil) | 26 | Unteres Innenteil |
| 6 | Drehachse (Mittelteil) | 27 | Oberes Innenteil |
| 7 | Untere Traverse | 28 | Unteres Lager |
| 8 | Obere Traverse | 29 | Oberes Lager |
| 9 | Unterer Mittelblock | 30 | Untere Kanäle |
| 10 | Oberer Mittelblock | 31 | Obere Kanäle |
| 11 | Untere Seitenblöcke | 32 | Erstes Zahnrad |
| 12 | Obere Seitenblöcke | 33 | Zweites Zahnrad |
| 13 | Normierte Schnittstelle | 34 | Getriebe |
| 14 | Untere Führungsmittel | 35 | Motor |
| 15 | Obere Führungsmittel | 36 | Stellvorrichtung |
| 16 | Unteres Koordinationsmittel | 37 | Stellring |
| 17 | Obere Koordinationsmittel | 38 | Pratze |
| 18 | Durchgehende Öffnung (oberer Mittelblock) | 39 | Umlaufende Nut |
| | | 40 | Aussengewinde |
| 19 | Durchgehende Öffnung (unterer Mittelblock) | 41 | Holmen |
| | | 42 | Profilschienen |
| 20 | Untere Dreheinheit | 43 | Zahnstange |
| 21 | Obere Dreheinheit | 44 | Schleifkontakt (Datenübertra-gung) |
| 22 | Untere Adapterplatte (untere Dreheinheit) | | |

## Patentansprüche

1. Haltevorrichtung (1) für ein um eine Drehachse (6) drehbares Mittelteil (4), welches zwischen einer ersten und einer zweiten Formhälfte einer Spritzgiessvorrichtung angeordnet ist und ein oder mehrere Paare von im Wesentlichen parallel zueinander angeordneten Seitenflächen aufweist, in denen erste Kavitätenhälften angeordnet sind, welche im Bereich einer ersten und einer zweiten Trennebene zur Bildung von Formholräumen mit zweiten, respektive dritten Kavitätenhälften der ersten und der zweiten Formhälfte dienen, **dadurch gekennzeichnet, dass** die Haltevorrichtung (1) eine modular aufgebaute Traverse (7, 8) umfasst, die einen Mittelblock (9, 10) und mindestens einen am Mittelblock (9, 10) befestigten Seitenblock (11, 12) aufweist, wobei der Mittelblock (9, 10) Wirkverbindungsmittel zum Befestigen einer Dreheinheit (20, 21) zur drehbaren Halterung des Mittelteils (4) um die Drehachse (6) aufweist, und wobei der mindestens eine Seitenblock (11, 12) Wirkverbindungsmittel zum Befestigen eines Führungsmittels (14, 15) aufweist, mittels dem die Traverse (7, 8) gegenüber der Spritzgiessvorrichtung geführt wird.

2. Haltevorrichtung gemäss Patentanspruch 1, **dadurch gekennzeichnet, dass** die Haltevorrichtung (1) eine untere Haltevorrichtung (2) aufweist, die eine modular aufgebaute untere Traverse (7) umfasst, die einen Mittelblock (9) und mindestens einen am unteren Mittelblock (9) befestigten unteren Seitenblock (11) aufweist, wobei der untere Mittelblock (9) Wirkverbindungsmittel zum Befestigen einer unteren Dreheinheit (20) zur drehbaren Halterung des Mittelteils (4) um die Drehachse (6) aufweist.

3. Haltevorrichtung gemäss Patentanspruch 1 oder 2, **dadurch gekennzeichnet, dass** die Haltevorrichtung (1) eine obere Haltevorrichtung (3) aufweist, die eine modular aufgebaute obere Traverse (8) umfasst, die einen oberen Mittelblock (10) und mindestens einen am oberen Mittelblock (10) befestigten oberen Seitenblock (12) aufweist, wobei der obere Mittelblock (10) Wirkverbindungsmittel zum Befestigen einer oberen Dreheinheit (21) zur drehbaren Halterung des Mittelteils (4) um die Drehachse (6) aufweist.

4. Haltevorrichtung (1) gemäss einem der vorangehenden Patentansprüche, **dadurch gekennzeichnet, dass** der mindestens eine Seitenblock (11, 12) Wirkverbindungsmittel zum Befestigen eines Koordinationsmittels (16, 17) aufweist, mittels dem die Traverse (7, 8) gegenüber der Spritzgiessvorrichtung koordiniert wird.

5. Haltevorrichtung (1) gemäss Patentanspruch 4, **dadurch gekennzeichnet, dass** es sich bei den Koordinationsmitteln (16, 17) um Zahnstangen oder Hydraulikzylinder handelt.

6. Haltevorrichtung (1) gemäss einem der vorangehenden Patentansprüche, **dadurch gekennzeichnet, dass** die Dreheinheit (20, 21) ein gegenüber einem Aussenteil (24, 25) drehbar gelagertes Innenteil (26, 27) aufweist, wobei zwischen dem Aussenteil (24, 25) und dem Innenteil (26, 27) konzentrisch verlaufende, ringförmige Nuten zur Übergabe von Medien zwischen dem Aussenteil (24, 25) und dem Innenteil (26,27) angeordnet sind.

7. Haltevorrichtung (1) gemäss Patentanspruch 6, **dadurch gekennzeichnet, dass** die ringförmigen Nuten in axialer Richtung (z) versetzt zueinander angeordnet sind.

8. Haltevorrichtung (1) gemäss Patentanspruch 6, **dadurch gekennzeichnet, dass** die ringförmigen Nuten in radialer Richtung versetzt zueinander angeordnet sind.

9. Haltevorrichtung (1) gemäss einem der Patentansprüche 6 bis 8, **dadurch gekennzeichnet, dass** das Innenteil (26, 27) eine Adapterplatte (22, 23) zum Wirkverbinden mit dem drehbaren Mittelteil (4) aufweist.

10. Haltevorrichtung (1) gemäss einem der Patentansprüche 6 bis 8, **dadurch gekennzeichnet, dass** das Innenteil (26, 27) fest mit dem drehbaren Mittelteil (4) wirkverbunden ist.

11. Haltevorrichtung (1) gemäss einem der Patentansprüche 6 bis 10, **dadurch gekennzeichnet, dass** das Innenteil (26, 27) axial verlaufende Kanäle (30, 31) zur Übergabe von Medien an das drehende Mittelteil aufweist.

12. Haltevorrichtung (1) gemäss einem der Patentansprüche 6 bis 10, **dadurch gekennzeichnet, dass** die Adapterplatte (22, 23) Schnellkupplungen zur Übergabe von Medien zwischen der Adapterplatte (22, 23) und dem drehbaren Mittelteil (4) aufweist.

13. Haltevorrichtung (1) gemäss einem der vorangehenden Patentansprüche, **dadurch gekennzeichnet, dass** mindestens eine Haltevorrichtung (2, 3) einen Motor (35) aufweist, der über ein Getriebe (32, 33) mit dem drehenden Mittelteil (4) wirkverbunden ist und zum Antreiben desselben dient.

14. Haltevorrichtung (1) gemäss Patentanspruch 13, **dadurch gekennzeichnet, dass** das Getriebe (32, 33) ein Planetengetriebe ist.

15. Haltevorrichtung (1) gemäss einem der vorangehenden Patentansprüche, **dadurch gekennzeichnet, dass** die Haltevorrichtung (1) eine Stellvorrichtung (36) aufweist, mittels der eine Adapterplatte (22, 23) gegenüber dem Mittelblock (4) in axialer Richtung verstellbar ist.

16. Haltevorrichtung (1) gemäss einem der vorangehenden Patentansprüche, **dadurch gekennzeichnet, dass** der Mittelblock (4) eine in axialer Richtung (z) verlaufende, durchgehende Öffnung (18, 19) aufweist, welche zur Aufnahme einer Dreheinheit (20, 21) dient.

17. Spritzgiessvorrichtung mit einer ersten und einer zweiten Formhälfte und mindestens einer zwischen diesen beiden angeordneten Haltevorrichtung (1) zur Halterung eines drehbaren Mittelteils (4) gemäss einem der vorangehenden Patentansprüche.

18. Spritzgiessvorrichtung gemäss Patentanspruch 17, **dadurch gekennzeichnet, dass** die Haltevorrichtung (1) fest mit der Spritzgiessvorrichtung verbunden ist.

## Claims

1. A holding device (1) for a center part (4) which can be rotated about an axis of rotation (6) and which is arranged between a first and a second mold half of an injection molding device and has one or more pairs of side surfaces which are arranged substantially parallel to one another and in which are arranged first cavity halves which serve to form mold cavities with second or third cavity halves respectively of the first and the second mold half in the region of a first and a second parting plane, **characterized in that** the holding device (1) comprises a modular cross member (7, 8) which has a center block (9, 10) and at least one side block (11, 12) which is attached to the center block (9, 10), wherein the center block (9, 10) has active connecting means to attach a rotation unit (20, 21) for rotatably holding the center part (4) about the axis of rotation (6), and wherein the at least one side block (11, 12) has operative connecting means for attaching a guide means (14, 15) by means of which the cross member (7, 8) is guided with respect to the injection molding device.

2. The holding device as claimed in patent claim 1, **characterized in that** the holding device (1) has a lower holding device (2) which comprises a modular lower cross member (7) which has a center block (9) and at least one lower side block (11) attached to the lower center block (9), wherein the lower center block (9) has operative connecting means for attaching a lower rotating unit (20) for rotatably holding the center part (4) about the axis of rotation (6).

3. The holding device as claimed in patent claim 1 or 2, **characterized in that** the holding device (1) has an upper holding device (3) which comprises a modular upper cross member (8) which has an upper center block (10) and at least one upper side block (12) attached to the upper center block (10), wherein the upper center block (10) has operative connecting means for attaching an upper rotating unit (21) for rotatably holding the center part (4) about the axis of rotation (6).

4. The holding device (1) as claimed in one of the preceding patent claims, **characterized in that** the at least one side block (11, 12) has operative connecting means for attaching a coordination means (16, 17) by means of which the cross member (7, 8) is coordinated with respect to the injection molding device.

5. The holding device (1) as claimed in patent claim 4, **characterized in that** the coordination means (16, 17) are toothed racks or hydraulic cylinders.

6. The holding device (1) as claimed in one of the preceding patent claims, **characterized in that** the rotating unit (20, 21) has an inner part (26, 27) which is rotatably mounted with respect to an outer part (24, 25), wherein concentrically running annular grooves for transferring media between the outer part (24, 25) and the inner part (26, 27) are arranged between the outer part (24, 25) and the inner part (26, 27).

7. The holding device (1) as claimed in patent claim 6, **characterized in that** the annular grooves are arranged offset with respect to one another in the axial direction (z).

8. The holding device (1) as claimed in patent claim 6, **characterized in that** the annular grooves are arranged offset with respect to one another in the radial direction.

9. The holding device (1) as claimed in one of patent claims 6 to 8, **characterized in that** the inner part (26, 27) has an adapter plate (22, 23) for operative connection to the rotatable center part (4).

10. The holding device (1) as claimed in one of patent claims 6 to 8, **characterized in that** the inner part (26, 27) is securely operatively connected to the rotatable center part (4).

11. The holding device (1) as claimed in one of patent claims 6 to 10, **characterized in that** the inner part (26, 27) has axially running channels (30, 31) for transferring media to the rotating center part.

12. The holding device (1) as claimed in one of patent claims 6 to 10, **characterized in that** the adapter plate (22, 23) has quick-release couplings for transferring media between the adapter plate (22, 23) and the rotatable center part (4).

13. The holding device (1) as claimed in one of the preceding patent claims, **characterized in that** at least one holding device (2, 3) has a motor (35) which is operatively connected by means of a gear system (32, 33) to the rotating center part (4) and is used to drive said center part.

14. The holding device (1) as claimed in patent claim 13, **characterized in that** the gear system (32, 33) is a planetary gear.

15. The holding device (1) as claimed in one of the preceding patent claims, **characterized in that** the holding device (1) has an adjustment device (36) by means of which an adapter plate (22, 23) can be adjusted in an axial direction with respect to the center block (4).

16. The holding device (1) as claimed in one of the preceding patent claims, **characterized in that** the center block (4) has a continuous opening (18, 19) which runs in an axial direction (z) and which serves to accommodate a rotating unit (20, 21).

17. An injection molding device having a first and a second mold half and at least one holding device (1) arranged between these two for holding a rotatable center part (4) as claimed in one of the preceding patent claims.

18. The injection molding device as claimed in patent claim 17, **characterized in that** the holding device (1) is fixedly connected to the injection molding device.

## Revendications

1. Dispositif de maintien (1) pour une partie centrale (4) pouvant tourner autour d'un axe de rotation (6), qui est disposée entre un premier et un second demi-moule d'un dispositif de moulage par injection et qui présente une ou plusieurs paires de faces latérales disposées sensiblement parallèlement entre elles, dans lesquelles sont situées des premières demi-empreintes qui servent à former, dans la région d'un premier et d'un second plan de joint, des empreintes comprenant des deuxièmes et troisièmes demi-empreintes appartenant respectivement au premier et au second demi-moule, **caractérisé en ce que** le dispositif de maintien (1) comprend une traverse (7, 8) de construction modulaire qui présente un bloc central (9,10) et au moins un bloc latéral (11, 12) fixé au bloc central (9, 10), le bloc central (9, 10) présentant des moyens d'assemblage effectif servant à fixer une unité de rotation (20, 21) destinée à maintenir la partie centrale (4) libre en rotation autour de l'axe de rotation (6), et l'au moins un bloc latéral (11, 12) présentant des moyens d'assemblage effectif servant à fixer un moyen de guidage (14, 15) au moyen duquel la traverse (7, 8) est guidée par rapport au dispositif de moulage par injection.

2. Dispositif de maintien selon la revendication 1, **caractérisé en ce que** le dispositif de maintien (1) présente un dispositif de maintien inférieur (2) qui comprend une traverse inférieure (7) de construction modulaire, laquelle présente un bloc central (9) et au moins un bloc latéral inférieur (11) fixé au bloc central inférieur (9), le bloc central inférieur (9) présentant des moyens d'assemblage effectif qui servent à fixer une unité de rotation inférieure (20) destinée à maintenir la partie centrale (4) libre en rotation autour de l'axe de rotation (6).

3. Dispositif de maintien selon l'une des revendications 1 ou 2, **caractérisé en ce que** le dispositif de maintien (1) présente un dispositif de maintien supérieur (3) qui comprend une traverse supérieure (8) de construction modulaire qui présente un bloc central supérieur (10) et au moins un bloc latéral supérieur (12) fixé au bloc central supérieur (10), le bloc central supérieur (10) présentant des moyens d'assemblage effectif servant à fixer une unité de rotation supérieure (21) destinée à maintenir la partie centrale (4) libre en rotation autour de l'axe de rotation (6).

4. Dispositif de maintien (1) selon l'une des revendications précédentes, **caractérisé en ce que** le au moins un bloc latéral (11, 12) présente des moyens d'assemblage effectif servant à fixer un moyen de coordination (16, 17) au moyen duquel la traverse (7, 8) est coordonnée par rapport au dispositif de moulage par injection.

5. Dispositif de maintien (1) selon la revendication 4, **caractérisé en ce que** les moyens de coordination (16, 17) sont constitués par des crémaillères ou par des cylindres hydrauliques.

6. Dispositif de maintien (1) selon l'une des revendications précédentes, **caractérisé en ce que** l'unité de rotation (20, 21) présente une partie intérieure (26, 27) montée de façon rotative par rapport à une partie extérieure (24, 25), des rainures annulaires s'étendant concentriquement destinées à transférer des milieux entre la partie extérieure (24, 25) et la partie intérieure (26,27) étant disposées entre la partie extérieure (24, 25) et la partie intérieure (26, 27).

7. Dispositif de maintien (1) selon la revendication 6, **caractérisé en ce que** les rainures annulaires sont disposées de façon décalée l'une par rapport à l'autre dans la direction axiale (z).

8. Dispositif de maintien (1) selon la revendication 6, **caractérisé en ce que** les rainures annulaires sont disposées de façon décalée l'une par rapport à l'autre dans la direction radiale.

9. Dispositif de maintien (1) selon l'une des revendications 6 à 8, **caractérisé en ce que** la partie intérieure (26, 27) présente une plaque adaptateur (22, 23) destinée à être assemblée effectivement à la partie centrale rotative (4).

10. Dispositif de maintien (1) selon l'une des revendications 6 à 8, **caractérisé en ce que** la partie intérieure (26, 27) est assemblée effectivement et rigidement à la partie centrale rotative (4).

11. Dispositif de maintien (1) selon l'une des revendications 6 à 10, **caractérisé en ce que** la partie intérieure (26, 27) présente des canaux (30, 31) s'étendant axialement destinés à transférer des milieux à la partie centrale rotative.

12. Dispositif de maintien (1) selon l'une des revendications 6 à 10, **caractérisé en ce que** la plaque adaptateur (22, 23) présente des raccords rapides pour le transfert de milieux entre la plaque adaptateur (22, 23) et la partie centrale rotative (4).

13. Dispositif de maintien (1) selon l'une des revendications précédentes, **caractérisé en ce qu'**au moins un dispositif de maintien (2, 3) présente un moteur (35) qui est relié effectivement par un mécanisme (32, 33) à la partie centrale rotative (4) et qui sert à entraîner cette dernière.

14. Dispositif de maintien (1) selon la revendication 13, **caractérisé en ce que** le mécanisme (32, 33) est un train épicycloïdal.

15. Dispositif de maintien (1) selon l'une des revendications précédentes, **caractérisé en ce que** le dispositif de maintien (1) présente un dispositif de réglage (36) au moyen duquel une plaque adaptateur (22, 23) peut être réglée par rapport au bloc central (4) dans la direction axiale.

16. Dispositif de maintien (1) selon l'une des revendications précédentes, **caractérisé en ce que** le bloc central (4) présente une ouverture traversante (18, 19) s'étendant dans la direction axiale (z), qui sert à recevoir une unité de rotation (20,21).

17. Dispositif de moulage par injection comprenant un premier et un second demi-moule et au moins un dispositif de maintien (1) qui est placé entre ces deux demi-moules et qui est destiné à maintenir une partie centrale rotative (4), selon l'une des revendications précédentes.

18. Dispositif de moulage par injection selon la revendication 17, **caractérisé en ce que** le dispositif de maintien (1) est relié rigidement au dispositif de moulage par injection.
